# EUROPEAN PATENT APPLICATION

(11) **EP 3 958 145 A1**
(43) Date of publication of application: **23.02.2022**
(21) Application number: 21206945.4
(22) Date of filing: 08.11.2021
(51) Int. Cl.: G06F 16/332

(54) **METHOD AND APPARATUS FOR SEMANTIC RETRIEVAL, DEVICE AND STORAGE MEDIUM**

(30) Priority: 09.02.2021 CN 202110186927
(71) Applicant: Beijing Baidu Netcom Science and Technology Co., Ltd., Beijing 100085 (CN)
(72) Inventor: LIN, Zenan, Beijing, 100085 (CN); LU, Jiajun, Beijing, 100085 (CN)
(74) Representative: V.O.

(57) **Abstract**

The disclosure provides a method and apparatus for a semantic retrieval, a device and a storage medium, relates to technical field of artificial intelligence, such as the fields of knowledge graph, deep learning and natural language processing. A specific implementation of the method includes: receiving (201) query information, and performing sequence labeling on the query information based on a pre-constructed knowledge graph to obtain a sequence labeling result, where the sequence labeling result includes a predetermined information part of the knowledge graph and a semantic retrieval part; constructing (202) a set of a candidate entity matching the sequence labeling result based on the knowledge graph; and performing (203) sematic matching between an entity in the set of the candidate entity and the semantic retrieval part in the sequence labeling result to obtain a set of an entity having a semantic relevance higher than a preset threshold. This implementation provides the method for a semantic retrieval based on the knowledge graph, which improves the efficiency and accuracy of the semantic retrieval, thereby improving the user experience.

## Description

### TECHNICAL FIELD

Embodiments of the disclosure relate to the field of computer, specifically to the fields of artificial intelligence, such as knowledge graph, deep learning and natural language processing, and in particular to a method and apparatus for a semantic retrieval, a device and a storage medium.

### BACKGROUND

With the popularization and development of artificial intelligence, users often need to retrieve the information they need from the massive information on the Internet through search engines. However, since the search engines cannot fully understand the query information of the users, their current retrieval effects are not very satisfactory.

Most of current semantic retrieval methods still regard the query information of the users as information containing only entity names, and directly perform matching through fuzzy searches; or they only perform word segmentation on the query information, and then perform determination by using correlations, so that the query information of the users cannot be truly understand, thereby resulting in high error rates.

### SUMMARY

Embodiments of the disclosure provide a method and apparatus for a semantic retrieval, a device and a storage medium.

In a first aspect, embodiments of the disclosure provide a method for a semantic retrieval, and the method includes: receiving query information, and performing sequence labeling on the query information based on a pre-constructed knowledge graph to obtain a sequence labeling result, where the sequence labeling result includes a predetermined information part of the knowledge graph and a semantic retrieval part; constructing a set of a candidate entity matching the sequence labeling result based on the knowledge graph; and performing sematic matching between an entity in the set of the candidate entity and the semantic retrieval part in the sequence labeling result to obtain a set of an entity having a semantic relevance higher than a preset threshold.

In a second aspect, embodiments of the disclosure provide an apparatus for a semantic retrieval, and the apparatus includes: a labeling module configured to receive query information, and perform sequence labeling on the query information based on a pre-constructed knowledge graph to obtain a sequence labeling result, where the sequence labeling result includes a predetermined information part of the knowledge graph and a semantic retrieval part; a construction module configured to construct a set of a candidate entity matching the sequence labeling result based on the knowledge graph; and a matching module configured to perform sematic matching between an entity in the set of the candidate entity and the semantic retrieval part in the sequence labeling result to obtain a set of an entity having a semantic relevance higher than a preset threshold.

In a third aspect, embodiments of the disclosure provide an electronic device, and the electronic device includes: at least one processor; and a memory communicatively connected to the at least one processor, where the memory stores instructions executable by the at least one processor, and the instructions, when executed by the at least one processor, cause the at least one processor to execute the method as described in any of implementations of the first aspect.

In a fourth aspect, embodiments of the disclosure provide a non-transitory computer readable storage medium storing computer instructions, where the computer instructions cause a computer to execute the method as described in any of implementations of the first aspect.

In a fifth aspect, embodiments of the disclosure provide a computer program product including a computer program, where the computer program, when executed by a processor, implements the method as described in any of implementations of the first aspect.

According to the method and apparatus for a semantic retrieval, the device and the storage medium provided by embodiments of the disclosure, the query information is first received, and the sequence labeling is performed on the query information based on the pre-constructed knowledge graph to obtain the sequence labeling result, where the sequence labeling result includes the predetermined information part of the knowledge graph and the semantic retrieval part; then, the set of the candidate entity matching the sequence labeling result is constructed based on the knowledge graph; and finally the sematic matching is performed between the entity in the set of the candidate entity and the semantic retrieval part in the sequence labeling result to obtain the set of the entity having the semantic relevance higher than the preset threshold. The disclosure provides the method for a semantic retrieval based on the knowledge graph, which improves the efficiency and accuracy of the semantic retrieval, thereby improving the user experience.

It should be appreciated that the contents described in this section are not intended to identify the key or critical features of embodiments of the disclosure, nor is it intended to limit the scope of the disclosure. The other features of the disclosure will become easy to understand through the following description.

### BRIEF DESCRIPTION OF THE DRAWINGS

By reading the detailed description of nonlimiting embodiments with reference to the following accompanying drawings, other features, objects and advantages of the disclosure will become more apparent. The accompanying drawings are intended to provide a better understanding of the disclosure and do not constitute a limitation to the disclosure.
Fig. 1 is an example system architecture to which the disclosure may be applied;
Fig. 2 is a flowchart of an embodiment of a method for a semantic retrieval according to the disclosure;
Fig. 3 is a flowchart of another embodiment of the method for a semantic retrieval according to the disclosure;
Fig. 4 is an exploded flowchart of a correction step of the method for a semantic retrieval shown in Fig. 3;
Fig. 5 is an implementation block diagram of the method for a semantic retrieval according to the disclosure;
Fig. 6 is an application scenario diagram of the method for a semantic retrieval;
Fig. 7 is a schematic structural diagram of an embodiment of an apparatus for a semantic retrieval according to the disclosure; and
Fig. 8 is a block diagram of an electronic device adapted to implement the method for a semantic retrieval according to embodiments of the disclosure.

### DETAILED DESCRIPTION OF EMBODIMENTS

Example embodiments of the disclosure are described below in combination with the accompanying drawings, where various details of embodiments of the disclosure are included to facilitate understanding and should be considered as examples only. Therefore, those of ordinary skill in the art should realize that various changes and modifications may be made to the embodiments described herein without departing from the scope and spirit of the disclosure. Similarly, for clarity and conciseness, descriptions of well-know functions and structures are omitted in the following description.

It should be noted that the embodiments in the disclosure and the features in the embodiments may be combined with each other on a non-conflict basis. The disclosure will be described below in detail with reference to the accompanying drawings and in combination with the embodiments.

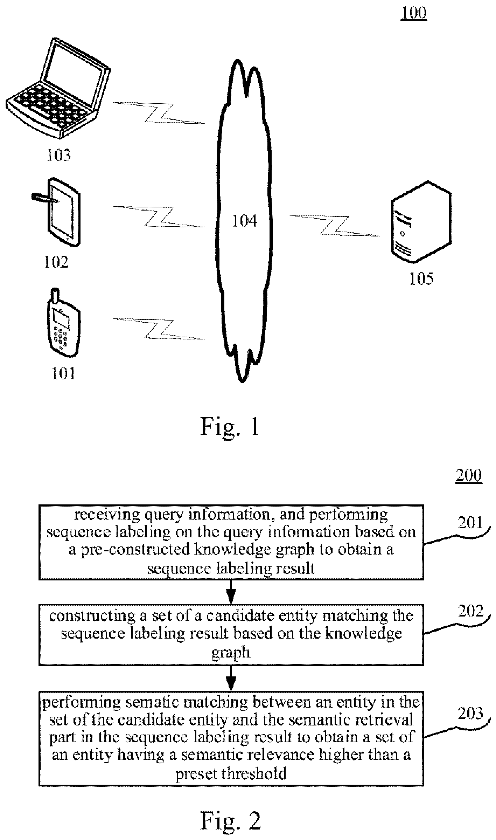

Fig. 1 shows an example system architecture 100 to which embodiments of a method or apparatus for a semantic retrieval according to the disclosure may be applied.

As shown in Fig. 1, the system architecture 100 may include terminal devices 101, 102, 103, a network 104 and a server 105. The network 104 serves as a medium for providing a communication link between the terminal devices 101, 102, 103 and the server 105. The network 104 may include various types of connections, such as wired or wireless communication links, or optical fiber cables.

A user may use the terminal devices 101, 102, 103 to interact with the server 105 through the network 104 to receive or send messages, and the like. Various client applications, such as search engines, may be installed on the terminal devices 101, 102, 103.

The terminal devices 101, 102, 103 may be hardware or software. When the terminal devices 101, 102, 103 are hardware, the terminal devices 101, 102, 103 may be various electronic devices, including but not limited to, a smart phone, a tablet computer, a laptop portable computer and a desktop computer; and when the terminal devices 101, 102, 103 are software, the terminal devices 101, 102, 103 may be installed in the electronic devices, and may be implemented as multiple software pieces or software modules, or as a single software piece or software module, which is not specifically limited herein.

The server 105 may provide various services. For example, the server 105 may analyze and process messages obtained from the terminal devices 101, 102, 103, and generate a processing result (such as a set of an entity).

It should be noted that the server 105 may be hardware or software. When the server 105 is hardware, the server 105 may be implemented as a distributed server cluster composed of multiple servers, or as a single server; and when the server 105 is software, the server 105 may be implemented as multiple software pieces or software modules (such as for providing distributed services), or as a single software piece or software module, which is not specifically limited herein.

It should be noted that the method for a semantic retrieval provided by embodiments of the disclosure is generally executed by the server 105. Correspondingly, the apparatus for a semantic retrieval is also generally provided in the server 105.

It should be appreciated that the number of the terminal devices, the network and the server in Fig. 1 is merely illustrative. Any number of terminal devices, networks and servers may be provided based on actual requirements.

Further referring to Fig. 2, Fig. 2 shows a flow 200 of an embodiment of a method for a semantic retrieval according to the disclosure. The method for a semantic retrieval includes steps 201 to 203.

Step 201 includes receiving query information, and performing sequence labeling on the query information based on a pre-constructed knowledge graph to obtain a sequence labeling result.

In the embodiment, an execution body (such as server 105 shown in Fig. 1) of the method for a semantic retrieval may receive the query information, and perform the sequence labeling on the query information based on the pre-constructed knowledge graph to obtain the sequence labeling result. The sequence labeling result includes a predetermined information part of the knowledge graph and a semantic retrieval part. The query information may be any text information input by the user that can express a query requirement of the user. After the query information input by the user is received, the sequence labeling is performed on the query information based on the pre-constructed knowledge graph. The knowledge graph is a database representing attributes of different entities and a relationship between the different entities. In the knowledge graph, the entities are taken as nodes, the entities are connected to each other by edges, and the entities and their respective values are connected to each other by edges, thereby forming a structured and graph-like database. An entity (or a concept) refers to a specific physical entity or abstract concept that exists or has existed in the real world, such as a character, an article, a structure, a product, a movie, a building, a location, a country, an organization, an art work, a science and technology or a science theorem. A connection (an edge) between entities represents a relationship between the entities, and a connection (an edge) between an entity and its value indicates that the entity has an attribute of the value. A knowledge graph may be constructed by using an existing knowledge graph construction method, such as using a knowledge graph neural network training model, which is not specifically limited herein. For example, a pre-trained sequence labeling model may be used to perform the sequence labeling on the query information, and the query information is labeled as the predetermined information part of the knowledge graph and the semantic retrieval part. The predetermined information part of the knowledge graph is information already existing in the knowledge graph. As an example, when the query information is "what is the portion other than "wild" in the name of the movie about survival in the wild in which A plays a role", it can be known based on the knowledge graph that "A" is an entity, and is the alias for the movie star A1, and the user knows that the domain is a movie, and the name of the movie is "wild XX". The semantic retrieval part is a part that can not be recognized at a string level of the knowledge graph, and is information on which the subsequent semantic matching is needed to perform. As an example, when the query information is "B plays a role of character 1, C plays a role of character 2, what is the name of the movie with N", where N is description information of a movie plot, and B and C are designated as actors in the query information(the predetermined information of the knowledge graph), and the role of B is character 1 (the predetermined information of the knowledge graph), and the role of C is character 2 (the predetermined information of the knowledge graph), and the domain for which a search is performed by the user is a movie (the predetermined information of the knowledge graph), and the question asked by the user is the name of the movie (the predetermined information of the knowledge graph), and the semantic retrieval part is N, the sequence labeling result is obtained as "B[starring] plays a role of character 1[character], C[starring] plays a role of character 2[character], what is the name (expression) of movie[domain] with N[semantic]".

Step 202 includes constructing a set of a candidate entity matching the sequence labeling result based on the knowledge graph.

In the embodiment, the execution body may construct the set of the candidate entity matching the sequence labeling result based on the knowledge graph. Based on the complete knowledge graph information, the set of the candidate entity is screened for the sequence labeling result, and the set of the candidate entity is reduced as much as possible based on the existing information, so that the set of the candidate entity is more consistent with the sequence labeling result and more accurate. As an example, when the query information is "B plays a role of character 1, C plays a role of character 2, what is the name of the movie with N", where N is description information of a movie plot, and the labeling sequence is performed on the query information, and the sequence labeling result is obtained as "B[starring] plays a role of character 1[character], C[starring] plays a role of character 2[character], what is the name (expression) of the movie[domain] with N[semantic]". After the query information is analyzed, it is found that a type of an entity whose domain is a movie is the objective of the search. By using the knowledge graph information, a search is performed first for a full set of entities whose domains are movie first. A search is then performed for a set of an entity in which B and C are both starring actors. After that, whether the role of B in the entity is character 1 is determined, and it is found that character 1 does not exist; and then, whether the role of C is character 2 is determined, and it is also found that character 2 does not exist. In this case, it is determined that the characters input by the user is proxies or aliases or information with a more general meaning or a more specific meaning. Therefore, by using the information with a more general meaning or a more specific meaning in the knowledge graph, it is found that B plays a role of character 3, and character 1 is a hyponym of character 3, and character 3 is a hypernym (a general term) of character 1. Therefore, all entities, for which B plays a role of character 1 and character 3 has a more general meaning or a more specific meaning, are screened, thereby further reducing the set of the candidate entity. Therefore, although character 1 is not completely equal to a character of a movie entity, there are some entities whose characters are character 3 which is a general term of character 1, so that the set of the candidate entity can also be screened. However, for character 2, a method for reducing the set of the candidate entity cannot be obtained by using the information with a more general meaning or a more specific meaning in the knowledge graph, and in this case, only the sequence labeling result can be modified, i.e., [character] of character 2 can be modified to [semantic], so that the semantic matching can be performed subsequently. The final sequence labeling result is obtained as "B[starring] plays a role of character 1[character], C[starring] plays a role of character 2[semantic], what is the name [expression] of the movie[domain] with N[semantic]".

Step 203 includes performing sematic matching between an entity in the set of the candidate entity and the semantic retrieval part in the sequence labeling result to obtain a set of an entity having a semantic relevance higher than a preset threshold.

In the embodiment, the execution body may perform the sematic matching between the entity in the set of the candidate entity and the semantic retrieval part in the sequence labeling result to obtain the set of the entity having the semantic relevance higher than the preset threshold. Based on the set of the candidate entity constructed in the step 202, the semantic matching is sequentially performed between each entity in the set of the candidate entity and the [semantic] parts in the sequence labeling result of the query information based on a pre-trained semantic matching model that is offline trained, so as to select the set of the entity having the higher semantic relevance. As an example, when the query information is "B plays a role of character 1, C plays a role of character 2, what is the name of movie with N", where N is description information of a movie plot, and the sequence labeling result of the query information is "B[starring] plays a role of character 1[character], C[starring] plays a role of character 2[semantic], what is the name [expression] of the movie[domain] with N[semantic]". Assuming that the set of the candidate entity constructed in the step 202 includes 30 candidate entities, the semantic matching is sequentially performed between the 30 candidate entities and the [semantic] parts, i.e., "character 2" and "N", and semantic relevance values are calculated, thereby obtaining an entity with a high semantic relevance or a set of entities having high semantic relevance values. A semantic relevance is a value between zero and one, and the greater the value is, the higher the relevance is.

According to the method for a semantic retrieval provided by embodiments of the disclosure, the query information is first received, and the sequence labeling is performed on the query information based on the pre-constructed knowledge graph to obtain the sequence labeling result, where the sequence labeling result includes the predetermined information part of the knowledge graph and the semantic retrieval part; then, the set of the candidate entity matching the sequence labeling result is constructed based on the knowledge graph; and finally the sematic matching is performed between the entity in the set of the candidate entity and the semantic retrieval part in the sequence labeling result to obtain the set of the entity having the semantic relevance higher than the preset threshold. The disclosure provides the method for a semantic retrieval based on the knowledge graph. The method can fully understand the complex semantics of the user query information, divide the user query information into the predetermined information part of the knowledge graph and the semantic retrieval part, perform the semantic matching between each entity in the constructed set of the candidate entity and the semantic retrieval part, select the set of the entity having the highest semantic relevance as a final result, and return the final result to the user. The method improves the efficiency and accuracy of the semantic retrieval, thereby improving the user experience.

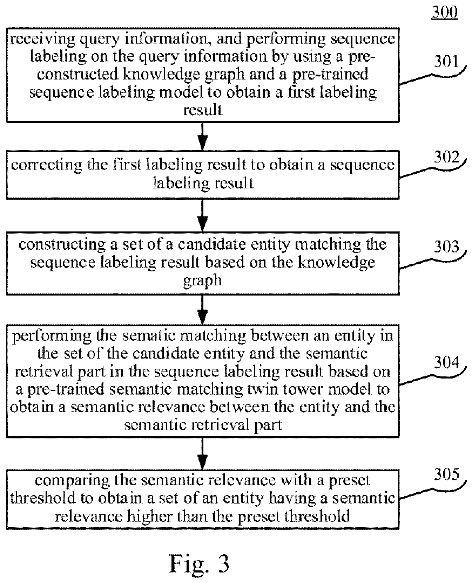

Further referring to Fig. 3, Fig. 3 shows a flow 300 of another embodiment of the method for a semantic retrieval according to the disclosure. The method for a semantic retrieval includes steps 301 to 305.

Step 301 includes receiving a query information, and performing sequence labeling on the query information by using a pre-constructed knowledge graph and a pre-trained sequence labeling model to obtain a first labeling result.

In the embodiment, the execution body of the method for a semantic retrieval may receive the query information, and perform the sequence labeling on the query information by using the pre-constructed knowledge graph and the pre-trained sequence labeling model to obtain the first labeling result. The first labeling result includes a predetermined information part of the knowledge graph and a semantic retrieval part. By labeling the user query information as the predetermined information part of the knowledge graph and the semantic retrieval part, an effect of fully understanding the complex semantics of the user query information can be achieved.

Alternatively, the sequence labeling may be performed on the query information by using the pre-constructed knowledge graph and a pre-trained sequence labeling model using ERNIE (Enhanced Representation through knowledge Integration), BiLSTM (Bidirectional Long Short-Term Memory) and CRF (Conditional Random Field), to distinguish between the predetermined information part of the knowledge graph and the semantic retrieval part in the query information, thereby obtaining the first labeling result. The combination of BiLSTM and CRF is a sequence labeling algorithm that combines the BiLSTM and the CRF, so that the model can not only consider the correlation between a previous part and a posterior part in a sequence like CRF, but also have feature extraction and fitting capabilities of LSTM (Long Short-Term Memory). The ERNIE is a continuous learning semantic understanding framework based on knowledge enhancement. The framework combines big data pre-training and multi-source rich knowledge, and continuously absorbs knowledge of words, structures, and semantics from mass text data through continuous learning technology, so as to achieve continuous evolution of model effects. Since ERNIE is a context-sensitive transfer learning model, model capabilities are further enhanced. As an example, the pre-trained sequence labeling model using ERNIE, BiLSTM and CRF may be constructed based on a manually labeled training sample to label parts in the query information.

Alternatively, the sequence labeling may be performed on the query information by using the pre-constructed knowledge graph and the pre-trained sequence labeling model using ERNIE, BiLSTM and CRF to distinguish between the predetermined information part of the knowledge graph and the semantic retrieval part in the query information, thereby obtaining the first labeling result.

Step 302 includes correcting the first labeling result to obtain a sequence labeling result.

In the embodiment, the execution body may correct the first labeling result to obtain the sequence labeling result. As an example, the knowledge graph and a natural language processing tool may be used to correct the first labeling result, so that parts of the query information may be more accurately labeled, thereby distinguishing between the predetermined information part of the knowledge graph and the semantic retrieval part in the query information, so that only the part required to be retrieved is retrieved, which narrows the scope of the semantic retrieval. For example, in the query information "what is the portion other than "wild" in the name of the movie about survival in the wild in which A plays a role", "what is the portion other than" and "in the name" are actually expressions of the question, which does not need a retrieval. If "what is the portion other than" and "in the name" are used in semantic matching when retrieving the entity, the accuracy is greatly reduced; or if the alias "A" is not recognized at all, and "A" is used in the semantic matching with entity plot information, the accuracy is greatly reduced as well.

Step 303 includes constructing a set of a candidate entity matching the sequence labeling result based on the knowledge graph.

In the embodiment, the execution body may construct the set of the candidate entity matching the sequence labeling result based on the knowledge graph. The step 303 corresponds to the step 202 of the previous embodiment, and a specific implementation may be described with reference to the description of the step 202, and is not repeated herein.

Step 304 includes performing the sematic matching between an entity in the set of the candidate entity and the semantic retrieval part in the sequence labeling result based on a pre-trained semantic matching twin tower model to obtain a semantic relevance between the entity and the semantic retrieval part.

In the embodiment, the execution body may perform the sematic matching between the entity in the set of the candidate entity and the semantic retrieval part in the sequence labeling result based on the pre-trained semantic matching twin tower model to obtain the semantic relevance between the entity and the semantic retrieval part. The entity in the set of the candidate entity and a [semantic] part in the sequence labeling result are input into the pre-trained semantic matching twin tower model to obtain the semantic relevance between each entity in the set of the candidate entity and the [semantic] part, thereby solving a relevance matching problem of the semantic retrieval. As an example, a semantic retrieval word in the semantic retrieval part and entity information of the set of the candidate entity are input into a pre-trained semantic matching model using ERNIE, SIAMESE, POINTWISE and LSTM, thereby obtaining a semantic relevance between the semantic retrieval word and the entity in the set of candidate entity. The SIAMESE network can receive two inputs, and the POINTWISE is a common convolution method. The pre-trained semantic matching model is constructed by combining the ERNIE, the SIAMESE, the POINTWISE and the LSTM, so that an output result, i.e., the semantic relevance between the semantic retrieval word and each entity in the set of the candidate entity, may be obtained by inputting the semantic retrieval word and each entity in the set of the candidate entity into the pre-trained semantic matching model. For example, when the query information is "a movie about life in M courtyard", a sequence labeling result is obtained as "a movie[domain] about[preposition] life[semantic] in M courtyard[semantic]". A set of movie candidate entities may be obtained based on the step 303, and the semantic matching is performed between entity information of each entity in the set of the movie candidate entities and "M courtyard" in the [semantic] parts, and performed between entity information of each entity in the set of the movie candidate entities and "Life" in the [semantic] parts, thereby obtaining the semantic relevance between each entity and the [semantic] parts.

In some alternative implementations of the embodiment, an input source of the pre-trained semantic matching twin tower model includes: a semantic retrieval word in the semantic retrieval part and entity information of the knowledge graph. The entity information of the knowledge graph includes an entity plot description and an entity descriptive label.

Step 305 includes comparing the semantic relevance with a preset threshold to obtain a set of an entity having a semantic relevance higher than the preset threshold.

In the embodiment, the execution body may compare the semantic relevance with the preset threshold to obtain the set of the entity having the semantic relevance higher than the preset threshold. Since the semantic relevance is a value between zero and one, as an example, the preset threshold may be set to 0.9. That is, an entity whose relevance to each semantic retrieval word in the [semantic] parts is above 0.9. An average value of relevance values between the entity and all semantic retrieval words is calculated and used as a final score of the entity. For example, in the query information "a movie[domain] about[preposition] life[semantic] in M courtyard[semantic]", the [semantic] parts include "M courtyard" and "life". Assuming that a relevance between entity 1 in the set of the movie candidate entities and the retrieval word "M courtyard" is 0.92, a relevance between entity 1 in the set of the movie candidate entities and the retrieval word "life" is 0.8, a relevance between entity 2 in the set of the movie candidate entities and the retrieval word "M courtyard" is 0.92, and a relevance between entity 2 in the set of the movie candidate entities and the retrieval word "life" is 0.96, entity 2 is saved while entity 1 is not saved, and a final score of entity 2 is (0.92+0.96)/2=0.94. Finally, the top three entities having highest average scores are returned to the user as answers. If there are no three entities, one or two entities are returned. The number of returned entities is not specifically limited herein.

According to the method for a semantic retrieval provided by embodiments of the disclosure, the query information is first received, and the sequence labeling is performed on the query information by using the pre-constructed knowledge graph and the pre-trained sequence labeling model to obtain the first labeling result; the first labeling result is corrected to obtain the sequence labeling result; then, the set of the candidate entity matching the sequence labeling result is constructed based on the knowledge graph; the sematic matching is performed between the entity in the set of the candidate entity and the semantic retrieval part in the sequence labeling result based on the pre-trained semantic matching twin tower model to obtain the semantic relevance between the entity and the semantic retrieval part; and finally the semantic relevance is compared with the preset threshold to obtain the set of the entity having the semantic relevance higher than the preset threshold. The method for a semantic retrieval provided by embodiments of the disclosure obtains the set of the entity having the highest semantic relevance by performing the semantic matching between the semantic retrieval part in the sequence labeling result and each entity in the set of the candidate entity, fully understands the user query intention, and improves the accuracy of the semantic retrieval, thereby improving the user experience.

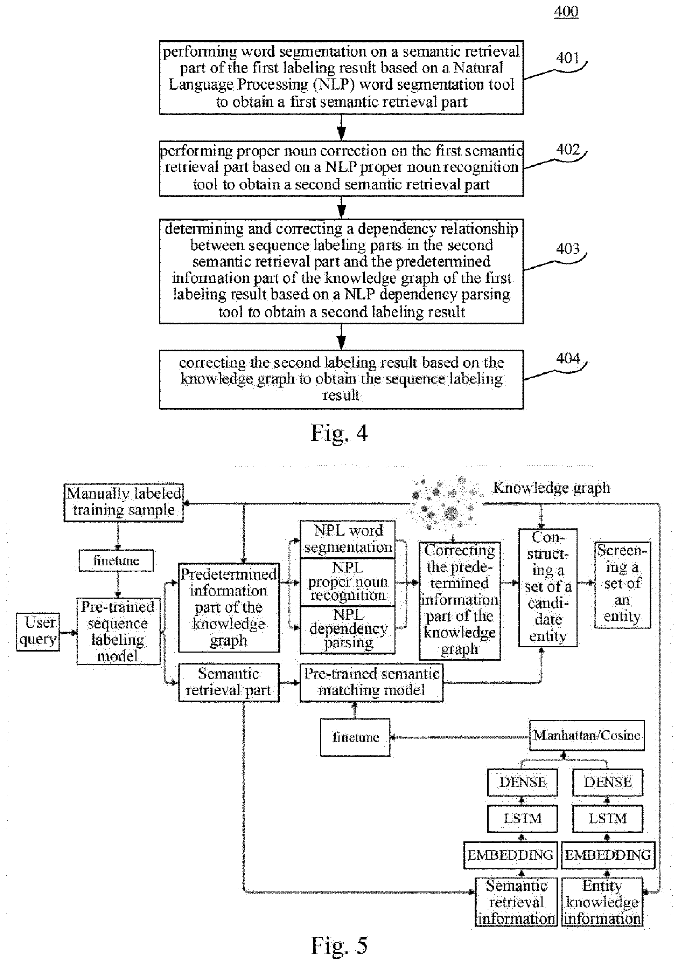

Further referring to Fig. 4, Fig. 4 shows an exploded flow 400 of a correction step of the method for a semantic retrieval shown in Fig. 3. The correction step may be exploded as steps 401 to 404.

Step 401 includes performing word segmentation on a semantic retrieval part of the first labeling result based on a Natural Language Processing (NLP) word segmentation tool to obtain a first semantic retrieval part.

In this embodiment, the word segmentation is performed on a [semantic] part of the first labeling result based on the NLP word segmentation tool to obtain the first semantic retrieval part. The word segmentation is to better understand the [semantic] part, so that the semantic matching between the [semantic] part and the entity is more accurate, otherwise the character string is too long and the semantic information is biased. For example, when the query information is "a movie about life in M courtyard", a sequence labeling result is obtained as "a movie[domain] about[preposition] life in M courtyard[semantic]". The word segmentation is performed on "life in M courtyard" in the [semantic] part by using the NLP word segmentation tool, and the first semantic retrieval part is obtained as "life[semantic] in M[semantic] courtyard[semantic]".

Step 402 includes performing proper noun correction on the first semantic retrieval part based on a NLP proper noun recognition tool to obtain a second semantic retrieval part.

In the embodiment, the proper noun correction is performed on the [semantic] parts segmented in the step 401 to prevent the word segmentation tool from segmenting a proper noun, which affects the sematic matching effect. For example, regarding the [semantic] part "life in M courtyard" of the query information "a movie about life in M courtyard", the result obtained in the step 401 after the word segmentation is "life[semantic] in M[semantic] courtyard[semantic]". However, "M courtyard" is actually a proper noun, and cannot be segmented, so "M courtyard" is recognized as a proper noun by using the NLP proper noun recognition tool, and the entire sequence labeling result is corrected to obtain the second semantic retrieval part as "M courtyard[semantic]", and a labeling result of the complete query information is "a movie[domain] about[preposition] life[semantic] in M courtyard[semantic]".

Step 403 includes determining and correcting a dependency relationship between sequence labeling parts in the second semantic retrieval part and the predetermined information part of the knowledge graph of the first labeling result based on a NLP dependency parsing tool to obtain a second labeling result.

In the embodiment, the dependency relationship between the sequence labeling parts in the query information is determined by using the NLP dependency parsing tool. That is, the dependency relationship between the sequence labeling parts in the second semantic retrieval part and the predetermined information part of the knowledge graph of the first labeling result is determined and corrected to obtain the second labeling result, so that the labeling result is more accurate. For example, when the query information is "B plays a role of character 1, C plays a role of character 2, what is the name of the movie about N", a sequence labeling result is "B[person] plays a role of character 1[character], C[person] plays a role of character 2[character], what is the name [expression] of the movie[domain] about N[semantic]". The dependency relationship (a dependency relationship between nodes) is determined based on the NLP dependency parsing tool, and it is found that "plays a role of character 1" describes "B" and "plays a role of character 2" describes "C", so "B" and "C" in the [person] parts should be actors (starring), not director or screenwriters. Therefore, the sequence labeling result is further corrected to obtain the second labeling result as "B[starring] plays a role of character 1[character], C[starring] plays a role of character 2[character], what is the name[expression] of the movie[domain] about N[sematic]".

Step 404 includes correcting the second labeling result based on the knowledge graph to obtain the sequence labeling result.

In the embodiment, the second labeling result is corrected based on the knowledge graph to obtain the final sequence labeling result. Since the knowledge graph has complete information, the existing labeling information in the second labeling result may be corrected by using the knowledge graph to make the sequence labeling consistent with the graph, so that the sequence labeling result is more accurate. For example, when the query information is "the literary movie of D", a sequence labeling result is "the literary[semantic] movie[domain] of D[person]". Based on the knowledge graph information, it is found that D has three types of identities in the domain of movies, i.e., a director, a screenwriter and an actor. In the query information, D is not designated as a director or the like, so a correction is performed to obtain the final sequence labeling result as "the literary[semantic] movie[domain] of D[director]/[screenwriter]/[starring]".

According to the correction method provided by embodiments of the disclosure, the word segmentation is first performed on the semantic retrieval part of the first labeling result based on the NLP word segmentation tool to obtain the first semantic retrieval part; the proper noun correction is performed on the first semantic retrieval part based on the NLP proper noun recognition tool to obtain the second semantic retrieval part; then, the dependency relationship between the sequence labeling parts in the second semantic retrieval part and the predetermined information part of the knowledge graph of the first labeling result is determined and corrected based on the NLP dependency parsing tool to obtain the second labeling result; and finally, the second labeling result is corrected based on the knowledge graph to obtain the sequence labeling result. Embodiments of the disclosure provide the method for correcting the sequence labeling result. The method performs the word segmentation and proper noun recognition on the semantic retrieval part in the sequence labeling result by using the NLP tools, improves the effect and accuracy of the sematic matching, corrects the existing sequence labeling information by using the knowledge graph to make the sequence labeling graphic, and improves the accuracy of the labeling result.

Further referring to Fig. 5, Fig. 5 is an implementation block diagram of the method for a semantic retrieval according to the disclosure. As shown in Fig. 5, a user inputs query information "query", performs sequence labeling on the query information by using a pre-trained sequence labeling model (ERNIE+BiLSTM+CRF), and obtains a labeling result including a predetermined information part of a knowledge graph and a semantic retrieval part, where the pre-trained sequence labeling model is trained with manually labeled training samples and is obtained by fine-turning. On the one hand, the predetermined information part of the knowledge graph is processed by using a NPL word segmentation tool, a NPL proper noun recognition tool and a NPL dependency parsing tool, and then the predetermined information part of the knowledge graph is corrected based on the knowledge graph, and a set of a candidate entity matching the sequence labeling result is constructed. On the other hand, a semantic retrieval word in the semantic retrieval part and entity knowledge information of the candidate entity are input into a pre-trained semantic matching model (ERNIE+SIAMESE+POINTWISE+LSTM) and processed by an embedding layer, a LSRM layer and a dense layer, and a Manhattan distance or a Cosine similarity therebetween is calculated, so that a semantic relevance between the semantic retrieval word in the semantic retrieval part and the entity in the set of the candidate entity is obtained, and the set of the candidate entity is screened based on the semantic relevance to obtain a final set of an entity.

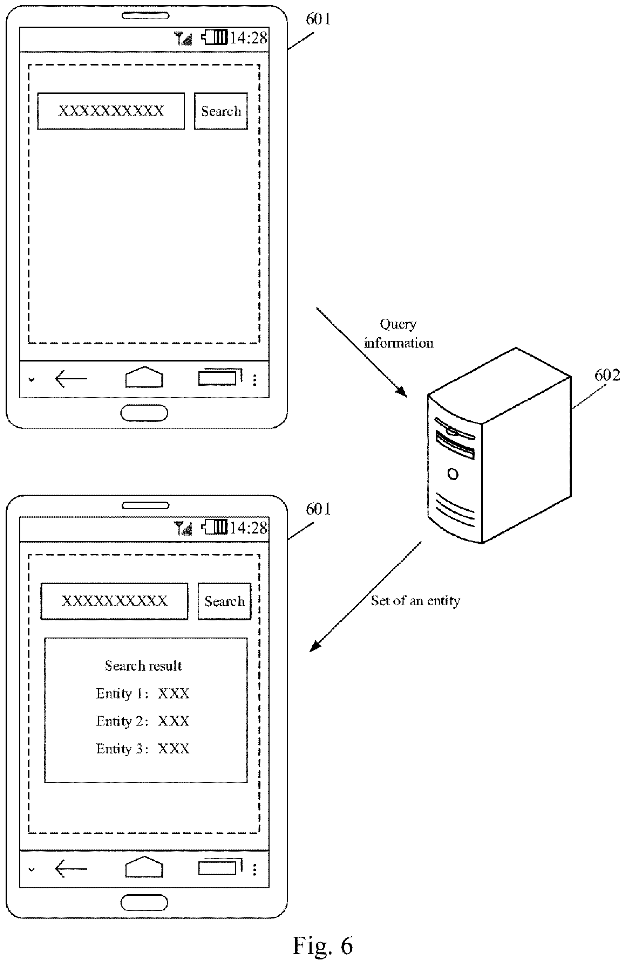

Further referring to Fig. 6, Fig. 6 is an application scenario diagram of the method for a semantic retrieval. As shown in Fig. 6, a user inputs query information "XXXXXXXXXX" on a terminal device 601, and clicks to search. A server 602 acquires the query information input by the user on the terminal device, performs sequence labeling on the query information based on a pre-constructed knowledge graph, obtains a sequence labeling result including a predetermined information part of the knowledge graph and a semantic retrieval part, constructs a set of a candidate entity matching the sequence labeling result based on the knowledge graph, performs sematic matching between an entity in the set of the candidate entity and the semantic retrieval part in the sequence labeling result to obtain a set of an entity having a semantic relevance higher than a preset threshold, returns the set of the entity to the user, and displays the set of the entity on the terminal device 601. The set of the entity may include one or more entities, such as entity 1, entity 2 and entity 3.

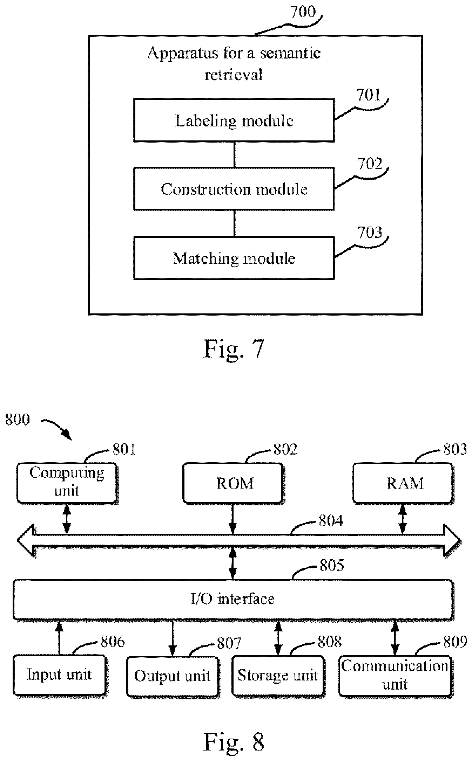

Further referring to Fig. 7, as an implementation of the method shown in each of the above figures, the disclosure provides an embodiment of an apparatus for a semantic retrieval. The embodiment of the apparatus corresponds to the embodiment of the method shown in Fig. 2, and the apparatus is particularly applicable to various electronic devices.

As shown in Fig. 7, the apparatus 700 for a sematic retrieval of the embodiment may include: a labeling module 701, a construction module 702 and a matching module 703. The labeling module 701 is configured to receive query information, and perform sequence labeling on the query information based on a pre-constructed knowledge graph to obtain a sequence labeling result, where the sequence labeling result includes a predetermined information part of the knowledge graph and a semantic retrieval part; the construction module 702 is configured to construct a set of a candidate entity matching the sequence labeling result based on the knowledge graph; and the matching module 703 is configured to perform sematic matching between an entity in the set of the candidate entity and the semantic retrieval part in the sequence labeling result to obtain a set of an entity having a semantic relevance higher than a preset threshold.

In the embodiment, the specific processing of the labeling module 701, the construction module 702 and the matching module 703 of the apparatus 700 for a semantic retrieval and the technical effects thereof may be described with reference to the relevant description of steps 201 to 203 in the embodiment corresponding to Fig. 2, and are not repeated herein.

In some alternative implementations of the embodiment, the labeling module includes: a labeling submodule configured to receive the query information, and perform the sequence labeling on the query information by using the pre-constructed knowledge graph and a pre-trained sequence labeling model to obtain a first labeling result; and a correction submodule configured to correct the first labeling result to obtain the sequence labeling result.

In some alternative implementations of the embodiment, the correction submodule is further configured to: perform word segmentation on a semantic retrieval part of the first labeling result based on a Natural Language Processing (NLP) word segmentation tool to obtain a first semantic retrieval part; perform proper noun correction on the first semantic retrieval part based on a NLP proper noun recognition tool to obtain a second semantic retrieval part; determine and correct a dependency relationship between sequence labeling parts in the second semantic retrieval part and the predetermined information part of the knowledge graph of the first labeling result based on a NLP dependency parsing tool to obtain a second labeling result; and correct the second labeling result based on the knowledge graph to obtain the sequence labeling result.

In some alternative implementations of the embodiment, the matching module is further configured to: perform the sematic matching between the entity in the set of the candidate entity and the semantic retrieval part in the sequence labeling result based on a pre-trained semantic matching twin tower model to obtain a semantic relevance between the entity and the semantic retrieval part; and compare the semantic relevance with the preset threshold to obtain the set of the entity having the semantic relevance higher than the preset threshold.

In some alternative implementations of the embodiment, an input source of the pre-trained semantic matching twin tower model includes: a semantic retrieval word in the semantic retrieval part and entity information of the knowledge graph.

According to embodiments of the disclosure, the disclosure further provides an electronic device, a readable storage medium and a computer program product.

Fig. 8 shows a schematic block diagram of an electronic device 800 adapted to implement embodiments of the disclosure. The electronic device is intended to represent various forms of digital computers, such as laptops, desktops, worktables, personal digital assistants, servers, blade servers, mainframe computers and other suitable computers. The electronic device may alternatively represent various forms of mobile devices, such as personal digital processing, cellular phones, smart phones, wearable devices and other similar computing devices. The components, their connections and relationships, and their functions shown herein are examples only, and are not intended to limit the implementations of the disclosure as described and/or claimed herein.

As shown in Fig. 8, the device 800 may include a computing unit 801, which may execute various appropriate actions and processes in accordance with a computer program stored in a read-only memory (ROM) 802 or a computer program loaded into a random-access memory (RAM) 803 from a storage unit 808. The RAM 803 may alternatively store various programs and data required by operations of the device 800. The computing unit 801, the ROM 802 and the RAM 803 are connected to each other through a bus 804. An input/output (I/O) interface 805 is also connected to the bus 804.

Multiple components of the device 800 are connected to the I/O interface 805, and include: an input unit 806, such as a keyboard and a mouse; an output unit 807, such as various types of displays and a speaker; a storage unit 808, such as a magnetic disk and an optical disk; and a communication unit 809, such as a network card, a modem and a wireless communication transceiver. The communication unit 809 allows the device 800 to exchange information or data with other devices through a computer network, such as the Internet and/or various telecommunications networks.

The computing unit 801 may be various general-purpose and/or specific-purpose processing components having processing and computing capabilities. Some examples of the computing unit 801 include, but are not limited to, a central processing unit (CPU), a graphics processing unit (GPU), various specific artificial intelligence (AI) computing chips, various computing units running machine learning model algorithms, a digital signal processor (DSP), and any appropriate processor, controller, microcontroller and the like. The computing unit 801 performs various methods and processing described above, such as the method for a semantic retrieval. For example, in some embodiments, the method for a semantic retrieval may be implemented as a computer software program, which is tangibly included in a machine-readable medium, such as the storage unit 808. In some embodiments, part or all of the computer program may be loaded and/or installed on the device 800 through the ROM 802 and/or the communication unit 809. When the computer program is loaded into the RAM 803 and executed by the computing unit 801, one or more steps of the method for a semantic retrieval described above may be performed. Alternatively, in other embodiments, the computing unit 801 may be configured to perform the method for a semantic retrieval in any other appropriate manner (such as through firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input device and at least one output device, and send the data and instructions to the storage system, the at least one input device and the at least one output device.

Program codes used to implement the method of the disclosure may be written in any combination of one or more programming languages. These program codes may be provided to a processor or controller of a general-purpose computer, specific-purpose computer or other programmable data processing apparatus, so that the program codes, when executed by the processor or controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more specific example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other.

It should be appreciated that the steps of reordering, adding or deleting may be executed using the various forms shown above. For example, the steps described in the disclosure may be executed in parallel or sequentially or in a different order, so long as the expected results of the technical solutions provided in the disclosure may be realized, and no limitation is imposed herein.

The above specific implementations are not intended to limit the scope of the disclosure. It should be appreciated by those skilled in the art that various modifications, combinations, sub-combinations, and substitutions may be made depending on design requirements and other factors. Any modification, equivalent and modification that fall within the spirit and principles of the disclosure are intended to be included within the scope of the disclosure.

## Claims

1. A method for a semantic retrieval, the method comprising:
receiving (201) query information, and performing sequence labeling on the query information based on a pre-constructed knowledge graph to obtain a sequence labeling result, wherein the sequence labeling result comprises a predetermined information part of the knowledge graph and a semantic retrieval part;
constructing (202) a set of a candidate entity matching the sequence labeling result based on the knowledge graph; and
performing (203) sematic matching between an entity in the set of the candidate entity and the semantic retrieval part in the sequence labeling result to obtain a set of an entity having a semantic relevance higher than a preset threshold.

2. The method according to claim 1, wherein receiving the query information, and performing the sequence labeling on the query information based on the pre-constructed knowledge graph to obtain the sequence labeling result, comprises:
receiving (301) the query information, and performing the sequence labeling on the query information by using the pre-constructed knowledge graph and a pre-trained sequence labeling model to obtain a first labeling result; and
correcting (302) the first labeling result to obtain the sequence labeling result.

3. The method according to claim 2, wherein correcting the first labeling result to obtain the sequence labeling result, comprises:
performing (401) a word segmentation on a semantic retrieval part of the first labeling result based on a natural language processing (NLP) word segmentation tool to obtain a first semantic retrieval part;
performing (402) a proper noun correction on the first semantic retrieval part based on a NLP proper noun recognition tool to obtain a second semantic retrieval part;
determining (403) and correcting a dependency relationship between sequence labeling parts in the second semantic retrieval part and the predetermined information part of the knowledge graph of the first labeling result based on a NLP dependency parsing tool to obtain a second labeling result; and
correcting (404) the second labeling result based on the knowledge graph to obtain the sequence labeling result.

4. The method according to any one of claims 1 to 3,
wherein performing sematic matching between the entity in the set of the candidate entity and the semantic retrieval part in the sequence labeling result to obtain the set of an entity having the semantic relevance higher than the preset threshold, comprises:
performing the sematic matching between the entity in the set of the candidate entity and the semantic retrieval part in the sequence labeling result based on a pre-trained semantic matching twin tower model to obtain a semantic relevance between the entity and the semantic retrieval part; and
comparing the semantic relevance with the preset threshold to obtain the set of the entity having the semantic relevance higher than the preset threshold.

5. The method according to claim 4, wherein an input source of the pre-trained semantic matching twin tower model comprises:
a semantic retrieval word in the semantic retrieval part and entity information of the knowledge graph.

6. An apparatus for a semantic retrieval, comprising:
a labeling module (701), configured to receive query information, and perform sequence labeling on the query information based on a pre-constructed knowledge graph to obtain a sequence labeling result, wherein the sequence labeling result comprises a predetermined information part of the knowledge graph and a semantic retrieval part;
a construction module (702), configured to construct a set of a candidate entity matching the sequence labeling result based on the knowledge graph; and
a matching module (703), configured to perform sematic matching between an entity in the set of the candidate entity and the semantic retrieval part in the sequence labeling result to obtain a set of an entity having a semantic relevance higher than a preset threshold.

7. The apparatus according to claim 6, wherein the labeling module comprises:
a labeling submodule, configured to receive the query information, and perform the sequence labeling on the query information by using the pre-constructed knowledge graph and a pre-trained sequence labeling model to obtain a first labeling result; and
a correction submodule, configured to correct the first labeling result to obtain the sequence labeling result.

8. The apparatus according to claim 7, wherein the correction submodule is further configured to:
perform a word segmentation on a semantic retrieval part of the first labeling result based on a natural language processing (NLP) word segmentation tool to obtain a first semantic retrieval part;
perform a proper noun correction on the first semantic retrieval part based on a NLP proper noun recognition tool to obtain a second semantic retrieval part;
determine and correct a dependency relationship between sequence labeling parts in the second semantic retrieval part and the predetermined information part of the knowledge graph of the first labeling result based on a NLP dependency parsing tool to obtain a second labeling result; and
correct the second labeling result based on the knowledge graph to obtain the sequence labeling result.

9. The apparatus according to any one of claims 6 to 8, wherein the matching module is further configured to:
perform the sematic matching between the entity in the set of the candidate entity and the semantic retrieval part in the sequence labeling result based on a pre-trained semantic matching twin tower model to obtain a semantic relevance between the entity and the semantic retrieval part; and
compare the semantic relevance with the preset threshold to obtain the set of the entity having the semantic relevance higher than the preset threshold.

10. The apparatus according to claim 9, wherein an input source of the pre-trained semantic matching twin tower model comprises:
a semantic retrieval word in the semantic retrieval part and entity information of the knowledge graph.

11. An electronic device, comprising:
at least one processor; and
a memory communicatively connected to the at least one processor, wherein the memory stores instructions executable by the at least one processor, and the instructions, when executed by the at least one processor, cause the at least one processor to execute the method according to any one of claims 1 to 5.

12. A non-transitory computer readable storage medium storing computer instructions, wherein the computer instructions cause a computer to execute the method according to any one of claims 1 to 5.

13. A computer program product comprising a computer program, wherein the computer program, when executed by a processor, implements the method according to any one of claims 1 to 5.
